(19) Europäisches Patentamt
European Patent Office
Office européen des brevets

(11) EP 0 637 990 B1

# (12) EUROPÄISCHE PATENTSCHRIFT

(45) Veröffentlichungstag und Bekanntmachung des Hinweises auf die Patenterteilung:
**31.07.1996 Patentblatt 1996/31**

(21) Anmeldenummer: **93908803.5**

(22) Anmeldetag: **21.04.1993**

(51) Int. Cl.$^6$: **B01D 71/78**, B01D 71/70, B01D 67/00, C08L 83/10

(86) Internationale Anmeldenummer:
**PCT/DE93/00347**

(87) Internationale Veröffentlichungsnummer:
**WO 93/20930 (28.10.1993 Gazette 1993/26)**

## (54) MEMBRAN AUF BASIS VON GRAFTCOPOLYMEREN
MEMBRANE BASED ON GRAFT COPOLYMERS
MEMBRANE A BASE DE COPOLYMERES GREFFES

(84) Benannte Vertragsstaaten:
**AT BE CH DE DK ES FR GB GR IE IT LI LU MC NL PT SE**

(30) Priorität: **22.04.1992 DE 4213217**

(43) Veröffentlichungstag der Anmeldung:
**15.02.1995 Patentblatt 1995/07**

(73) Patentinhaber: **GKSS-FORSCHUNGSZENTRUM GEESTHACHT GMBH**
**D-21502 Geesthacht (DE)**

(72) Erfinder:
- **FRITSCH, Detlev**
  **D-2050 Hamburg 80 (DE)**
- **PEINEMANN, Klaus, Victor**
  **D-2054 Geesthacht (DE)**
- **BEHLING, Rolf, Dieter**
  **D-2000 Hamburg 55 (DE)**
- **JUST, Regina**
  **D-2054 Geesthacht (DE)**

(74) Vertreter: **Niedmers, Ole, Dipl.-Phys.**
**Patentanwälte**
**Niedmers & Partner**
**Stahltwiete 23**
**D-22761 Hamburg (DE)**

(56) Entgegenhaltungen:

| | |
|---|---|
| **EP-A- 0 181 772** | **EP-A- 0 237 581** |
| **EP-A- 0 245 516** | **EP-A- 0 254 556** |
| **EP-A- 0 367 720** | **DE-A- 4 120 919** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Rank Xerox (UK) Business Services
2.13.0/3.4

## Beschreibung

Die Erfindung betrifft eine Membran, insbesondere eine Gastrenn- und Pervaporationsmembran, auf Basis von Graftcopolymeren.

Die erfindungsgemäße Membran dient zur Trennung von Gasgemischen und/oder von Gasmischungen, die aus Gasen und Dämpfen organischer Lösungsmittel bestehen, und/oder zur Pervaporation von wässrig/organischen oder organischen/ organischen Mischungen.

Es ist bekannt, zur Trennung von Gasgemischen und Dämpfen dichte Filme aus organischen Kunststoffen zur Anwendung zu bringen, welche die Funktion einer Membran übernehmen. Im wesentlichen gibt es zwei Typen von Membranen, nämlich a) integralasymmetrische Membranen und b) Kompositmembranen.

Integralasymmetrische Membranen bestehen aus Polymeren oder verträglichen Polymermischungen, die durch einen Phaseninversionsprozeß in die Form einer sich selbst tragenden und stützenden Membran gebracht werden.

Dadurch wird es möglich, eine sehr dünne, stabile Trennschicht des Polymeren oder der Polymermischung zu erhalten.

Komposit-Membranen bestehen aus dünnen Filmen, die auf geeignete Trägermaterialien organischer oder anorganischer Stoffe aufgebracht werden. Die Trägermaterialien müssen in Module einarbeitbar und formstabil sein. Sie müssen eine hohe Gaspermeabilität aufweisen. Als Trägermaterial stehen z. B. mikroporöse Polysulfon-, Polypropylen-, Polyvinylidenfluorid- oder Polyetherimid-Supports als polymere, organische Stoffe und mikroporöse Gläser oder mikroporöse Aluminiumoxide als anorganische Stoffe zur Auswahl. Beide, organische und anorganische Trägermaterialien können zur Glättung der Oberfläche mit einem sehr dünnen Film eines besonders gut gasdurchlässigen Polymeren (z.B. Poly(dimethylsiloxan) oder Poly(trimethylsilylpropin) behandelt sein.

Die eigentliche Trennschicht wird auf die Oberfläche des behandelten oder unbehandelten mikroporösen Trägers aufgebracht, wobei zum Zweck großer Gasflüsse in der Gas- und Gas/Dämpfetrennung angestrebt wird, einen möglichst dünnen Film (z.B. 0,5 bis 3 µm) des Trenn-Polymeren aufzubringen. Bei besonders dünnen, mikroporenfreien Filmen kann jedoch der Gasfluß durch die Trennschicht so hoch werden, daß der Widerstand des Trägermaterials einen Einfluß auf die Trennleistung der Membran gewinnt (I. Pinnau , J.G. Wijmans, I. Blume, T. Kuroda, K.-V. Peinemann, Gas Permeation through Composite Membranes, J. Membrane Sci., 37 (1988) 81 und US-A-4 931 181). Als Faustregel kann man davon ausgehen, daß der Einfluß des Trägerwiderstandes dann die Selektivität negativ beeinflußt, wenn der Gasfluß durch die Trennschicht bei etwa 10 % des Trägerflusses liegt. Die Effektivität der Gesamtmembran hängt also davon ab, wie die Trägermaterialien und die eigentliche Trennschicht aufeinander abgestimmt sind. Nicht alle Trägermaterialien, z.B. PVDF-Träger, Polysulfonträger insbesondere aber Hohlfadenmembranen, können mit den erforderlichen Gasflüssen hergestellt werden, um eine optimale Grundlage für sehr schnelle Trennmaterialien, wie z.B. eine PDMS-Membran von 0,5 - 1 µm Dicke, zu bilden.

Für spezielle Anwendungen in der Dämpfetrennung unter hohem Druck und besonders in der Pervaporation organisch/organischer oder wäßrig/organischer Lösungen ist es auch von Vorteil dickere Polymerfilme von etwa 3 µm bis zu 100 µm zum Einsatz zu bringen. Ein erhöhter Feeddruck ist beispielsweise in der Gas/Dämpfetrennung zur Abluftreinigung von Vorteil für den Membranprozeß, da hierdurch einerseits ein höherer Fluß durch die Membran erreicht wird und andererseits das Verhältnis Feedzu Permeatdruck kostengünstiger einstellbar ist.

Die Trennleistung eines gegebenen Polymers wird sich bei einem ungünstigen Druckverhältnis mehr oder weniger verschlechtern.

Als bekannte Polymere, die für Membrantrennprozesse in Frage kommen, kann man nennen:

Poly(dimethylsiloxan)
Poly(4-methyl-1-penten)
Ethylcellulose
Naturkautschuk
LD-Polyethylen
Celluloseacetat

In der Praxis hat sich das Elastomer Poly(dimethylsiloxan) (PDMS) als das am meisten benutzte Membranmaterial für die oben beschriebenen Anwendungen zur Problemlösung bewährt.

Die Herstellung von Kompositmembranen aus PDMS ist beispielsweise beschrieben in der EP-A-0 254 556 und EP-A-0 181 772.

Hinsichtlich der Dämpfetrennung konnte gezeigt werden (man vgl. K.-V. Peinemann, J. M. Mohr, R. W. Baker, The Separation of Organic Vapors from Air, AIChE Symp. Ser., 250 (1986) 19, daß die technische Brauchbarkeit eines gegebenen Membranmateriales von zwei wesentlichen Parametern beeinflußt wird: der Membranselektivität und dem Verhältnis von Feeddruck zu Permeatdruck. Das mögliche Druckverhältnis bei einem Membranprozeß wird wesentlich von der gestellten Trennaufgabe bestimmt und muß sich nach ökonomischen Kriterien richten. Die Membranselektivität wird hauptsächlich durch das Membranmaterial gegeben.

Um ein gegebenes Trennproblem zu lösen, wird bei Einsatz einer wenig selektiven Membran bei gleichem Fluß die erforderliche Membranfläche größer gegenüber einer selektiveren Membran. Der Fluß einer Membran hängt direkt von

deren Dicke ab. Die Membranfläche läßt sich also wieder verkleinern, wenn es gelingt, dünnere Membranen herzustellen. Der Erhöhung des Flusses sind aber einerseits dadurch Grenzen gesetzt, daß dünnere Filme als 1-3 µm nur sehr schwer fehlstellenfrei in großer Fläche zugänglich sind. Zum anderen hat bei sehr großen Flüssen durch die Komposit-Membran der Widerstand des Trägermaterials einen negativen Einfluß auf die Selektivität. Die erwartete Selektivität wird dann trotz porenfreier Membran nicht gefunden. Die Zunahme des Flusses hat also nicht den gewünschten Effekt.

Ein weiterer Punkt ergibt sich für die Anwendung von Membrantrennprozessen in der Lösemittelrückgewinnung aus Abluft dadurch, daß eine gegebene Membran mit einer Permeabilität $pO_2/pN_2$ von 2, verglichen mit einer Membran mit höherem Trennfaktor für Lösemitteldampf, aber gleichem Trennfaktor für $O_2/N_2$, größere Mengen Sauerstoff in der Anlage anreichert. Eine selektivere Membran vermindert also mögliche Sicherheitsprobleme einer Membrantrennanlage.

Aufgabe der Erfindung ist es, eine Membran mit einer höheren Selektivität bereitzustellen. Ferner ist es Aufgabe der Erfindung, Polymere bereitzustellen, die zu Membranfilmen verarbeitet werden können und auf einen mikroporösen Träger gut und dauerhaft haften.

Gelöst wird diese Aufgabe durch die Lehre der Ansprüche.

Bei einem Bestandteil der erfindungsgemäßen Membran und auch der erfindungsgemäßen Graftcopolymere wird ein erstes Polymer, das formal von Poly(dimethylsiloxan) ableitbar ist, mit folgender wiederkehrender Einheit der allgemeinen Formel I

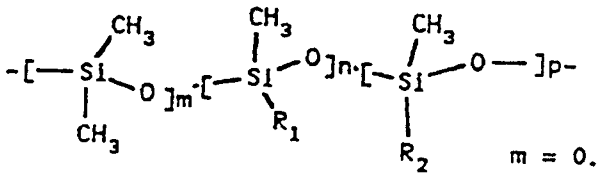

m = 0.1 - 0.9
n = 0.9 - 0.1
p = 0.03 - 0.04,

worin die Reste $R_1$ und $R_2$, die gleich oder verschieden sein können, einen linearen, verzweigten oder cyclischen $C_1$-$C_{12}$ Kohlenwasserstoffrest bedeuten, mit der Maßgabe, daß mindestens einer der Reste $R_1$ und $R_2$ einen linearen oder verzweigten Kohlenwasserstoffrest mit einer endständigen C=C Doppelbindung darstellt, ggf. ein zweites Polymer, das in der Hauptkette und/oder in der Seitenkette C=C Doppelbindungen besitzt und ein zur Hydrosilylierungsreaktion befähigtes niedermolekulares Siloxancopolymer in Lösung unvollständig vernetzt, wobei man diese Lösung auf einen unbehandelten oder behandelten, per se bekannten Träger aufbringt und dann über die in dem Graftcopolymer vorhandenen Doppelbindungen zur Unlöslichkeit vernetzt.

Bei den Resten $R_1$ und $R_2$, die keine Doppelbindungen aufweisen, handelt es sich beispielsweise um Alkylreste, wie Methyl-, Ethyl-, Propyl-, Butyl-...Octylreste.... Weist der Rest $R_1$ und/oder $R_2$ eine Doppelbindung auf, dann versteht es sich von selbst, daß dieser Rest mindestens 2 C-Atome besitzen muß. Der einfachste und gleichzeitig auch bevorzugte Rest ist der Vinylrest. Es können aber auch längerkettige Alkenylreste, wie Alkyl- und Butenylreste etc. eingesetzt werden.

Dieses erste Polymer, das man auch als Basispolymer bezeichnen kann, besitzt vorzugsweise eine mittlere Molmasse von 10 - 300.000 g/mol und ist von öliger Konsistenz. In dieser Form kann das erste Polymer jedoch nicht als Membran eingesetzt werden. Durch Zusatz von 5 - 10 Gew % einer zweiten Komponente bzw. eines Copolymers und Zusatz eines Katalysators lassen sich daraus nach intensiver Durchmischung und Wärmebehandlung gummiartige Formkörper vulkanisieren. Diese Technik ist für die Herstellung dünner (0,5 - 20 µm) Polymerfilme auf mikroporösem Träger jedoch ungeeignet.

Als Copolymer kann man zur Hydrosilylierungsreaktion befähigte niedermolekulare Siloxancopolyerme zur Anwendung bringen. Diese Siloxancopoymere weisen mindestens ein direkt ein an ein SI-Atom gebundenes H-Atom auf.

Die Vulkanisation kann man jedoch auch in Lösung durchführen und durch gelchromatografische Methoden on-line kontrollieren. Dies bietet den Vorteil, daß die Vulkanisierung bei einem definierten Punkt abgebrochen werden kann. Man erhält so gut definierte Lösungen, die als Basis für die Befilmung per se bekannter mikroporöser Träger Verwendung finden kann.

Das Basispolymer kann auch zusammen mit einem oder mehreren anderen Polymeren, die C=C Bindungen enthalten, vulkanisiert werden. Dazu mischt man das Basispolymer vorzugsweise in einem geeigneten Lösungsmittel mit dem oder den zweiten Polymeren, versetzt mit einer wie oben beschriebenen zweiten Komponente und einem Katalysator und vernetzt (vulkanisiert) in Lösung teilweise und somit bis zu einem bestimmten Punkt. Dadurch ist es möglich,

polymere Stoffe, die sonst im Film eine Phasentrennung ergeben würden, chemisch zu verbinden und in Form eines Filmes fehlstellenfrei auf mikroporöse Träger zu bringen.

Als zweites Polymer, das C=C Doppelbindungen aufweist, kann man beispielsweise ein Polymer mit einer sich wiederholenden Einheit der folgenden Formel II verwenden.

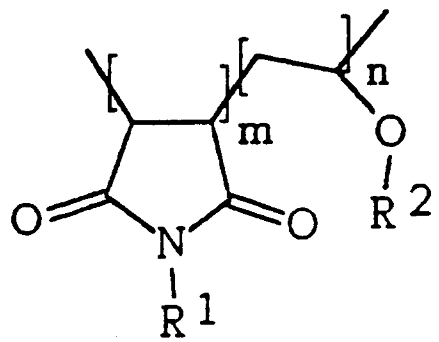

(1)

m=n

Derartige Polymere sind aus der DE-A-41 20 919.2 bekannt; auf die Offenbarung dieser deutschen Patentanmeldung wird hiermit ausdrücklich Bezug genommen. Die Reste $R^1$ und $R^2$, die gleich oder verschieden sein können, bedeuten dabei vorzugsweise einen linearen, verzweigten oder cyclischen $C_1$-$C_{18}$ Kohlenwasserstoffrest, der eine in der Hauptkette oder in einer Seitenkette angeordnete, vorzugsweise terminale Doppelbindung aufweist.

Als zweites Polymer können auch durch Metathese-Reaktion aus cyclischen Olefinen (vorzugsweise Cyclopenten, Cyclooocten, Norbornen und Dicyclopentadien) synthetisierte Polymere eingesetzt werden, die herstellungsbedingt eine definierte Menge an C=C Doppelbindungen aufweisen, so daß sie bei der erfindungsgemäßen Graftcopolymerisation Anwendung finden können.

Als zweites Polymer können nicht nur die oben beschriebenen Polymere sondern alle Polymere eingesetzt werden, die C=C Doppelbindungen besitzen und darüber zur Vernetzung befähigt sind. Das Verhältnis von erstem Polymer bzw. Basispolymer zu zweitem Polymeren ist nicht kritisch. Diese Polymere können in beliebigen Verhältnissen eingesetzt werden.

Aus den oben genannten Graftcopolymeren, mit oder ohne reaktiven Gruppen, können auf glatter Oberfläche von Glas, hydrophobem Glas, Metall oder Kunststoffen oder mikroporösen Substraten (z. B. mikroporösen Flachmembranen oder Hohlfäden) bestehend aus Polytetrafluorethylen, Polypropylen, Polysulfon, Polyetherimid oder ähnlichen mit den üblichen Methoden Filme hergestellt werden. Diese Methoden sind vorteilhaft für weniger viskose Lösungen, die in der amerikanischen Literatur als "meniscus coating" oder "dip coating" beschrieben sind. Hiermit können bevorzugt dünne Filme von 0,5 µm bis 10 µm hergestellt werden. Für dickere Filme von 10 µm bis 200 µm wird der Auftrag aus konzentrierten Polymerlösungen mittels Messerklinge oder Glasstab bevorzugt. Für kleinere Membranstücke kann auch das Verdampfen einer 5 - 10%igen Polymerlösung offen auf einer Glasplatte oder in einer geschlossenen Kammer druch Spülung mit Stickstoff oder Argon als Schutzgas herangezogen werden.

Die Dicke der erhaltenen Membranen liegt gewöhnlich zwischen 0,5 und 200 µm.

Die erfindungsgemäßen Graftcopolymere besitzen bessere Gast-/Dampftrenneigenschaften als die bisher bekannten Polymere und lassen sich je nach Erfordernis zu sehr dünnen oder dicken, somit in der Dicke variabel einstellbaren Filmen verarbeiten. Sie sind ferner durch geeignete chemische Reaktionen quer vernetzbar und werden damit formstabil und unlöslich. Sie können auf einen mikroporösen Träger aufgebracht werden und haften dort gut und dauerhaft. Die mit Hilfe der erfindungsgemäßen Graftcopolymere erhaltenen erfindungsgemäßen Membranen sind in gleicher Weise für die Gas/Dämpfetrennung als auch für die Flüssig/Flüssigtrennung (Pervaporation) geeignet. Die Graftcopolymere lassen sich in reproduzierbarer und einfacher Weise in definierten Schichtdicken auf geeignete Trägermaterialien aufbringen und ergeben bessere Membranen als die bisher bekannten Membranen.

Die mit Hilfe der erfindungsgemäßen Graftcopolymere hergestellte Kompositmembranen für die Gas-/Dämpfetrennung und die Pervaportion besitzen bessere Selektivitäten und/oder Flüsse als bisher bekannte Membranen.

Beim erfindungsgemäßen Herstellungsverfahren werden die zur Anwendung gebrachten Polymere in Lösung vorvernetzt. Diese Vorvernetzung erfolgte bis zu einem definierten, für die Filmbildung günstigen Grad, wobei die Kontrolle der Vorvernetzung vorzugsweise mittels Gelchromatografie erfolgt. Die dabei eingesetzten Polymere sind insbesondere solche, die zur Quervernetzung geeignet sind.

Aus den nach der Vorvernetzung erhaltenen Lösungen lassen sich Dünnfilm-Kompositmembranen aus mikroporösen Trägern herstellen. Dazu werden die zur Anwendung gebrachten Filme nach Aufbringen auf den mikroporösen Träger aufgebracht und bis zur Unlöslichkeit vernetzt. Die Vorvernetzung und auch die Vernetzung bis zur Unlöslichkeit werden vorzugsweise durch eine Wärmebehandlung erzielt.

Dünne Polymerfilme von 0,5 bis 10 µm lassen sich aus den oben genannten Polymeren am besten durch "dip coating" oder Tauchverfahren auf mikroporösen Trägern auftragen. Dies sind die bevorzugten Auftragmethoden. Die Lösung hat üblicherweise eine Konzentration von 0,1 bis 10 %.

In der Schichtdicke besonders gut einstellbar werden Polymerfilme, wenn der mikroporöse Träger vorher mit einem dünnen Film aus Silikon überzogen wurde. Da eine Komponente der Graftcopolymeren aus Silikongummi besteht, ist eine besonders gute Haftung gewährleistet. Dies hat entsprechende Vorteile für die mechanische Stabilität der erfindungsgemäßen Membranen.

Membrantrennverfahren sind in der Anwendung komplexe Prozesse, deren Effektivität durch viele Parameter bedingt sind.

Ein wichtiger Parameter stellt die einsetzbare Membran, die die eigentliche Trennleistung ermöglicht, dar. Es ist deshalb von Vorteil, verschiedene Membranen im technischen Maßstab zur Verfügung zu haben, um verschiedene Trennprobleme mit Membrantrennverfahren optimieren zu können.

Die Dämpfe-/Gas-Selektivität der erfindungsgemäßen Membranen liegt für verschiedene Dämpfe wie Methanol, MTBE, n-Hexan, 1,1,1-Trichlorethan oder 1,1,2-Trichlorfluorethan um Faktoren von bis zu 5 besser, verglichen mit dem Membranstandard PDMS. Die Flüsse liegen dagegen gut in der gleichen Größenordnung.

In der Pervaporation zeigen die erfindungsgemäßen Membranen eine bessere Anreicherung der organischen Komponente als das Standardmembranmaterial PDMS, bei vergleichbarem Wasserfluß.

Wenn der Fluß durch die Gesamtmembran (=Trennschicht + Träger) in die Größenordnung von ca. 10 % des möglichen Flusses durch den Träger kommt, so ist dadurch schon eine Verringerung der Membranselektivität gegeben. Die vorliegenden Membranen sind in der Dicke, d. h. im Fluß gut einstellbar, können also die optimale Trennleistung auf jedem Träger gewährleisten. Dies im Gegensatz zu PDMS, wo die Dicke, die problemlos erhalten werden kann, auf 0,5 bis ca. 10 µm begrenzt ist.

## Ausführungsbeispiele

In den Beispielen 1 und 2 ist die Herstellung und Analytik vorvernetzter Polymerlösungen beschrieben.

Beispiel 3 beschreibt die Beschichtung mikroporöser Träger aus PEI und PVDF mit Lösungen nach Beispiel 1 und 2.

Beispiel 4 gibt die Ergebnisse der Pervaporation von n-Butanol/Wasser-Gemischen im Vergleich zu PDMS (Stand der Technik) wieder.

Beispiel 5 beschreibt die Herstellung von Filmen definierter Schichtdicke aus Lösungen nach Beispiel 1 und die erzielten Gasflüsse auf einer trägergestützten 1 µm dicken PDMS-Schicht.

Die Beispiele 6 - 8 beschreiben die Herstellung von Silikon-graft-Copolymeren mit mittleren polaren (Beispiel 6; A4), polarem (Beispiel 7; C4) und unpolarem (Beispiel 8; P4) Charakter als vorvernetzte, gebrauchsfertige Lösung.

In Beispiel 9 sind die Permeabilitäten der verschiedenen oben beschriebenen Polymere für Reingase und verschiedene Dämpfe beschrieben.

Beispiel 10 gibt die Flüsse und Selektivitäten im Realgemisch Methanol/-Argon bei verschiedenen Methanolpartialdrucken an.

### Beispiel 1

### Membran GI

60 g (35-40 %) Methyloctyl-(3-4 %) vinylmethyl-(56-64 %) dimethylsiloxanterpolymer wurden mit 6 g (30-40 %) Methylhydro-( 60-75 %) dimethylsiloxan Copolymer versetzt und in 600 ml i-Octan gelöst. Es wurden 0,6 ml 3 % Platindivinyltetramethyldisiloxan Komplex in Xylol zugegeben und 20 Minuten bei 100 ° C gerührt.

Die so hergestellte Lösung eignete sich sehr gut zur Herstellung mikroporenfreier Filme auf porösem Träger und war einige Wochen nahezu unverändert haltbar.

Die Vernetzungsreaktion wurde gelchromatograpisch mit Hilfe eines RI/-Viskometer Doppeldetektors verfolgt, wobei die Polydispersität und die Intrinsische Viskosität on-line in Tetrahydrofuran gemessen wurden. Zu Beginn der Reaktion wurden die Polydispersität ($M_w/M_n$) zu 3.1 und die Intrinsische Viskosität (IV) zu 0.13 dl/g bestimmt. Nach 20 Minuten betrug $M_w/M_n$ 17.3 und IV 0.30 dl/g.

Beispiel 2

100 g (35-40 %) Methyloctyl-(3-4 %) vinylmethyl-(56-64 %) dimethylsiloxan Terpolymer wurden in 1000 ml i-Octan gelöst und mit 10 g (25-30 %) Methylhydro- (70-75 %) methyloctylsiloxan Copolymer versetzt. Es wurden 1.0 ml 3 % Platindivinyltetramethyldisiloxan Komplex in Xylol zugegeben und 20 Minuten bei 100 ° C gerührt.

Die so hergestellte Lösung eignete sich sehr gut zur Herstellung mikroporenfreier Filme auf prösem Träger und war einige Wochen nahezu unverändert haltbar.

Wie in Beispiel 1 wurden die Polydispersität und die Intrinsische Viskosität gemessen. $M_w/M_n$ betrug zu Beginn 3.0, nach 20 Minuten bei 100 ° C war $M_w/M_n$ 76. IV wurde zu Beginn zu 0.10 dl/g und am Ende der Vorvernetzung zu 0.24 dl/g bestimmt.

Beispiel 3

Herstellung von Dünn-Film-Kompositmembranen aus in den Beispielen 1 und 2 hergestellten Lösungen.

Zum Beschichten wurden mikroporöser Polyetherimid-Träger auf Vlies (=PEI; Q ca. 300 $m^3/m^2$.h.bar) und mikroporöser Polyvinylidenfluorid-Träger auf Vlies (=PVDF; Q ca. 90 $m^3/m^2$.h.bar) verwendet. Es wurde entweder von Hand oder mit einer Beschichtungsmaschine durch dip-coating aus 2 %, 3 %, 5 % oder 10 % Lösung beschichtet und bei 80-100 ° C 3 - 10 Minuten vulkanisiert. Die erhaltenen Filme waren klar, farblos und bis zur Unlöslichkeit vernetzt.

Um mit der Beschichtungsmaschine dickere Filme zu erhalten, konnte durch erneutes Beschichten eines beschichteten und vulkanisierten Trägers die Schichtdicke der aktiven Membran nahezu verdoppelt werden (s. Bsp. 8 - 9).

Es wurden Teststücke genommen, mit denen die Gasflüsse von Stickstoff und Sauerstoff gemessen wurden. Damit ist es möglich, die effektive Membrandicke zu messen und zu überprüfen, ob Fehlstellen (Pin-Holes) in der Membran vorliegen. Bei einer $O_2/N_2$ Selektivität von 2.1 - 2.3, bestimmt durch p $O_2$/p $_{N2}$, ist die Membran fehlstellenfrei.

Mit dem Rasterelektronenmikroskop wurde die Schichtdicke der dicksten Membran bestimmt. Die Relation gemessene Schichtdicke/Gasfluß (p $N_2$) wurde als Basis zur Berechnung aller Membrandicken herangezogen.

| a) Membranen von Lösungen nach Beispiel 1 (Nr. 1-11): | | | | |
|---|---|---|---|---|
| Herstellungsmethode | p $N_2$ 1) | p $O_2$ 1) | $pO_2/pN_2$ | Membrandicke 2) |
| 1 Masch., Walze, 10% | 0.15 | 0.34 | 2.27 | 3.0 |
| 2 Masch., Dip-C. 5% | 0.14 | 0.30 | 2.14 | 3.2 |
| 3 Masch., Dip-C. 10% | 0.057 | 0.13 | 2.28 | 7.9 |
| 4 Hand, Schwamm, 10% | 0.028 | 0.063 | 2.25 | 16 (x mal) |
| 4a Hand, Schwamm, 10% | 0.016 | 0.036 | 2.25 | 28 (x mal) |
| 4b Hand, Schwamm, 10% | 0.0093 | 0.021 | 2.23 | 50 (x mal) |
| 5 Hand, Schwamm, 2% | 0.21 | 0.43 | 2.05 | 2.2 (4 x) |
| 6 Masch., Dip-C. 10% | 0.044 | 0.096 | 2.18 | 10 |
| 7 Masch., Dip-C. 10% | 0.080 | 0.18 | 2.25 | 5.6 PVDF |
| 8 Masch., Dip-C. 10% | 0.054 | 0.11 | 2.05 | 7.5 (1x) |
| 9 Masch., Dip-C. 10% | 0.034 | 0.081 | 2.32 | 13 (2x) |
| 10 Masch., Dip-C. 3% | 0.25 | 0.52 | 2.08 | 1.8 PVDF |
| 11 Masch., Dip-C. 5% | 0.22 | 0.47 | 2.14 | 2.0 PVDF |
| b) Membranen von Lösungen nach Beispiel 2 (Nr. 12-13): | | | | |
| 12 Masch., Dip-C. 10% | 0.047 | 0.105 | 2.25 | 9.6 |
| 13 Masch., Dip-C. 10% | 0.065 | 0.146 | 2.25 | 6.9 PVDF |
| Beispiele, wenn nicht anders vermerkt, auf Polyetherimidträger. | | | | |

1) in $m^3N/m^2.h.bar$
2) in µm

Beispiel 4

Zur Pervaporation von 1 Gew.-% n-Butanol/Wasser bei 50 ° C wurden Membranen nach Beispiel 3 gefertigt aus Lösung nach Beispiel 1 auf PEI-Träger verwendet. Außerdem wurden Kompositmembranen nach den Beispielen 6, 7 und 8 hierfür getestet.

Membranen nach Beispiel 3

| Membrandicke(µm) | Feed-Konz. Gew% | Perm. Konz. Gew% | Flußdichte (g/m².h) | | | β | α | Fluß BuOH/$H_2O$ |
|---|---|---|---|---|---|---|---|---|
| | | | gesamt | BuOH | Wasser | | | |
| 2.2 | 1.0 | 19.4 | 1800 | 350 | 1450 | 19 | 24 | 0.24 |
| 7.9 | 1.0 | 20.0 | 665 | 133 | 532 | 20 | 26 | 0.25 |
| 16 | 1.0 | 40.4 | 275 | 111 | 164 | 40 | 67 | 0.68 |
| 28 | 1.0 | 44.0 | 237 | 105 | 132 | 44 | 78 | 0.80 |
| 50 | 1.0 | 48.0 | 123 | 61.5 | 61.5 | 48 | 91 | 1.0 |
| 7.9 | 1.23 | 26.7 | 687 | 183 | 504 | 22 | 29 | 0.36(50°C) |
| 7.9 | 1.25 | 24.9 | 339 | 84 | 255 | 20 | 26 | 0.33(37°C) |
| 7.9[1)] | 1.0 | 22 | 687 | 151 | 536 | 22 | 28 | 0.28(50°C) |
| 7.9[1)] | 1.0 | 20 | 339 | 68 | 271 | 20 | 25 | 0.25(37°C) |
| zum Vergleich PDMS | | | | | | | | |
| 4.5 | 1.0 | 14 | 1900 | 266 | 1634 | 14 | 16 | 0.16 |
| 11 | 1.0 | 20 | 1000 | 200 | 800 | 20 | 25 | 0.25 |
| zum Vergleich Literaturwerte PDMS | | | | | | | | |
| 180 | 1.0 | 42.5 | 87 | 37 | 50 | 43 | 72 | 0.74(30°C) |
| 400 | 1.0 | 37 | 12.6 | 4.4 | 8.2 | 37 | 56 | 0.54(37°C) |

1) = Werte von 1.23 % BuOH im Feed auf 1.0 % umgerechnet!

Membranen nach Beispiel 6, 7 und 8

| Membrandicke(µm) | Feed-Konz. Gew% | Perm. Konz. Gew% | Flußdichte (g/$m^2$.h) | | | β | α | Fluß $\frac{BuOH}{H_2O}$ |
|---|---|---|---|---|---|---|---|---|
| | | | gesamt | BuOH | Wasser | | | |
| C4 (4 µm) | 1.08 | 25.7 | 1130 | 290 | 840 | 23 | 32 | 0.34 |
| | 1.02 | 19.3 | 1080 | 210 | 870 | 19 | 23 | 0.24 |
| | 0.95 | 17.6 | 1040 | 180 | 860 | 19 | 22 | 0.21 |
| | 0.91 | 17.6 | 1030 | 180 | 850 | 19 | 23 | 0.21 |
| | 0.88 | 16.3 | 1030 | 170 | 860 | 19 | 22 | 0.20 |
| P4(15 µm) | 0.975 | 35.0 | 252 | 88.2 | 163.8 | 36 | 55 | 0.54 |
| | 0.95 | 36.1 | 244 | 88.1 | 155.9 | 38 | 59 | 0.57 |
| | 0.95 | 35.2 | 244 | 85.9 | 158.1 | 37 | 57 | 0.54 |
| A4(11 µm) | 0.95 | 28.6 | 482 | 138 | 344 | 30 | 42 | 0.40 |
| | 0.95 | 26.9 | 502 | 135 | 367 | 28 | 38 | 0.37 |
| | 0.915 | 25.6 | 473 | 121 | 352 | 28 | 37 | 0.34 |
| | 0.88 | 24.7 | 452 | 112 | 340 | 28 | 37 | 0.33 |

Beispiel 5

Herstellung von Dünnfilm-Kompositmembranen mit abgestuftem, definierten Gasfluß über eine Größenordnung für Dämpfe.

Hierzu wurde eine nach Beispiel 1 hergestellte Lösung auf 0,5 %, 2,5 % und 5 % verdünnt und durch Dip-coating auf einen mit einer 1 µm PDMS-Schicht versehen mikroporösen PEI-Träger aufgebracht und durch Wärmebehandlung wie in Beispiel 3 beschrieben vernetzt. Die $O_2$- und N $_2$-Flüsse wurden gemessen, um die effektive Schichtdicke und die Freiheit von Fehlstellen zu finden.

Mit einer Meßapparatur zur Permeabilitätsmessung für Dämpfe bei fallenden Feeddrucken wurden die Membranflüsse im Bereich von ca. 100 bis 20 mbar bei 20 °C gemessen und mit einer e-Funktion für den Punkt 0 mbar Feeddruck ausgewertet. Der scheinbare Permeabilitätswert für Dämpfe bei 0 mbar Feeddruck dividiert durch die Permeabilität von $N_2$ ergibt eine sehr gute Näherung der Selektivität im Realdampf-/Gas-Gemisch. Diese Werte wurden mit einer 1 µm Standard PDMS Membran verglichen und zeigen höhere Selektivität und bei der dünneren Membran auch genügend große Flüsse. Die Meßwerte sind in folgender Tabelle erfaßt.

Tabelle KW-Permeabilität

Die Meßtemperatur lag bei 20 ° C.

TABELLE KW-Permeabilität:

Die Meßtemperatur lag bei 20°C.

| Membrantyp | 1) (µm) | $pN_2$ | $pC_2$ | $pC_4$ | $pC_6$ |
|---|---|---|---|---|---|
| PEI/ --- /GI 10% | 10 | 0.0435 | 0.44 | 1.8 | 7.2 |
| PEI/1 µm PDMS/GI 5.0% | 4.7 | 0.0944 | 0.92 | 4.1 | 13 |
| PEI/1 µm PDMS/GI 2.5% | 2.3 | 0.192 | 1.9 | 7.7 | 25 |
| PEI/1 µm PDMS/GI 0.5% | 0.7 | 0.324 | 3.1 | 12 | 36 |
| PEI/1 µm PDMS/ | | 0.81 | 7.0 | 22 | - |

1) effektive Membrandicke der Deckschicht; aus Gasfluß errechnet.

| Membrantyp | $pO_2/pN_2$ | $pC_2/pN_2$ | $pC_4/pN_2$ | $pC_6/pN_2$ |
|---|---|---|---|---|
| PEI/ --- /GI 10% | 2.3 | 10 | 41 | 166 |
| PEI/1 µm PDMS/GI 5.0% | 2.2 | 9.7 | 44 | 137 |
| PEI/1 µm PDMS/GI 2.5% | 2.2 | 9.7 | 40 | 129 |
| PEI/1 µm PDMS/GI 0.5% | 2.2 | 9.6 | 38 | 110 |
| PEI/1 µm PDMS/ --- | 2.2 | 8.7 | 27 | - |
| Flüsse (p) in $m^3{}_N/m^2$.h.bar; $C_2$=Ethan; $C_4$=n-Butan; $C_6$=n-Hexan | | | | |

Beispiel 6

Membran A4

7,0 g Poly( N-undecenoylmaleinimid-alt-octadecylvinylether) wurden in 150 ml i-Octan gelöst und mit 7,0 g (35-40%) Methyloctyl-(3-4%) vinylmethyl- (56-64%) dimethylsiloxan Terpolymer und mit 1,4 g (30-40%) Methyl-hydro- (60-75%) dimethylsiloxan Copolymer versetzt. Es wurden 150 µl 3 % Platindivinyltetramethyldisiloxan Katalysator zugegeben und 15 Minuten bei 70 ° C gerührt.

Die so hergestellte Lösung eignete sich sehr gut zur Herstellung mikroporenfreier Filme auf porösem Träger und war einige Wochen nahezu unverändert haltbar.

Gelchromatographisch wurde wie in Beispiel 1 die Vernetzungsreaktion kontrolliert und ein Anstieg der Polydispersität $M_w/M_n$ von 16 vor der Reaktion auf > 100 nach 15 Minuten gefunden. Aus dieser Lösung wurde eine Membran von 504 µm Dicke hergestellt und die Gasflüsse gemessen. Die Membran war wenig opaleszend und farblos. Mit nach dem gleichen Verfahren hergestellter Polymerlösung wurden auf einer Membranziehmaschine durch Dip-Coating Komposit-Membranen hergestellt. Die Gastrennwerte sind in Beispiel 9 zusammengefaßt. Die Pervaporation von n-Butanol/Wasser ist in Beispiel 4 beschrieben.

Beispiel 7

Membran C4

11,0 g Poly(N-undecenoylmaleinimid-alt-vinyl-2 -( 2-ethoxyethoxy) ethylether) wurden in 230 ml Tetrachlorkohlenstoff gelöst und mit 11.0 g (35-40%) Methyloctyl-( 3-4 %)vinylmethyl-(56-64%) dimethylsiloxan Terpolymer und 1,1 g

(30-40%) Methylhydro-( 60-75%) dimethylsiloxan Copolymer versetzt. Es wurden 230µl 3% Platindivinyltetramethyldisiloxan Katalysator zugegeben und 15 Minuten bei 50 ° C gerührt.

Die so hergestellte Lösung eignete sich sehr gut zur Herstellung mikroporenfreier Filme auf porösem Träger und war einige Wochen nahezu unverändert haltbar.

Gelchromatographisch wurde wie im Beispiel 1 die Vernetzungsreaktion kontrolliert und ein Anstieg der Polydispersität $M_w/M_n$ von 13 vor der Reaktion auf > 100 nach 15 Minuten gefunden.

Aus dieser Lösung wurde eine Membran von 120 µm Dicke hergestellt und die Gasflüsse gemessen. Die Membran war wenig opaleszend und farblos.

Mit nach dem gleichen Verfahren hergestellter Polymerlösung wurden auf einer Membranziehmaschine durch Dip-Coating einige Quadratmeter Komposit-Membranen hergestellt.

Die Gasmesswerte sind in Beispiel 9 und 10 zu finden.

Die Pervaporation von n-Butanol/Wasser ist in Beispiel 4 beschrieben.

Beispiel 8

Membran P4

5,0 g Vestenamer 6213 wurden in 120 ml Cyclohexan/ Tetrachlorkohlenstoff 100/20 Vol/Vol gelöst und mit 5,0 g (35-40%) Methyloctyl-( 3-4%) vinylmethyl-(56-64%) dimethylsiloxan Termpolymer und 0,5 g (30-40%) Methylhydro-( 60-75%) dimethylsiloxan Copolymer versetzt. Die klare Lösung wurde bei 70° C mit 50 µl 3% Platindivinyltetramethyldisiloxan Katalysator versetzt und 35 Minuten bei 70° C gerührt.

Die so hergestellte Lösung eignete sich sehr gut zur Herstellung mikroporenfreier Filme auf porösem Träger und war einige Wochen nahezu unverändert haltbar.

Gelchromatographisch wurde wie in Beispiel 1 die Vernetzungsreaktion kontrolliert und ein Anstieg der Polydispersität $M_w/M_n$ von 5,3 vor der Reaktion auf 6,7 nach 35 Minuten gefunden.

Aus dieser Lösung wurde eine Membran von 225 µm Dicke hergestellt und die Gasflüsse gemessen. Die Membran war milchig trübe, farblos und sehr elastisch.

Mit nach dem gleichen Verfahren hergestellter Polymerlösung wurden auf einer Membranziehmaschine durch Dip-Coating ca. 10 $m^2$ Komposit-Membranen hergestellt.

Die Gastrennwerte sind in Beispiel 9 zusammengefaßt.

Die Pervaporation von n-Butanol/Wasser ist in Beispiel 4 beschrieben.

Beispiel 9

In Beispiel 9 werden die Permeabilitäten und Gastrennwerte für Membranteststücke und Kompositmembranen aufgeführt. Die Kompositmembranen wurden auf einer Membranziehmaschine durch Dip-Coating in einigen Quadratmetern hergestellt.

Alle Meßwerte sind bei 30° C gemessen und auf Normbedingungen umgerechnet.

a) Membranteststücke

FLÜSSE:

| Membran | $pN_2$ | $pO_2$ | $pCH_4$ | $pCO_2$ |
|---|---|---|---|---|
| A4 | 19.2 | 44.9 | 59.6 | 225 |
| C4 | 5.1 | 12.3 | 17.5 | 83.9 |
| Gl/10% A4 | 43 | 95 | 134 | 429 |
| Gl/40% A4 | 17 | 38 | 55 | 186 |
| P4 | 14 | 34 | 49 | 177 |
| zum Vergleich: | | | | |
| PDMS | 73 | 154 | 227 | 780 |
| Fluß (p) in $m^3N.m/m^2.h.bar \times 10^{-8}$ | | | | |

SELEKTIVITÄTEN:

| Membran | $pO_2/pN_2$ | $pCH_4/pN_2$ | $pCO_2/pN_2$ |
|---|---|---|---|
| A4 | 2.3 | 3.1 | 12 |
| C4 | 2.4 | 3.5 | 17 |
| Gl/10% A4 | 2.2 | 3.1 | 10 |
| Gl/40% A4 | 2.2 | 3.0 | 11 |
| P4 | 2.4 | 3.5 | 13 |
| zum Vergleich: | | | |
| PDMS | 2.2 | 3.1 | 10 |

b) Kompositmembranen auf mikroporösem Polyetherimidträger (PEI).

TEST AUF FEHLSTELLENFREIHEIT:

| Membran | $pN_2$ | $pO_2$ | $pCO_2$ | $pO_2/pN_2$ | $pCO_2/pN_2$ |
|---|---|---|---|---|---|
| A4 (10%) | 0.018 | 0.045 | 0.25 | 2.5 | 14 |
| A4 (5%) | 0.023 | 0.058 | 0.34 | 2.6 | 15 |
| C4 (3%) | 0.048 | 0.116 | 0.75 | 2.4 | 16 |
| C4 (2X3%) | 0.023 | 0.063 | 0.47 | 2.7 | 20 |
| C4 (10%) | 0.012 | 0.029 | - | 2.5 | - |
| P4 (10%) | 0.0079 | 0.020 | - | 2.5 | - |
| Fluß (p) in $m^2N/m^3$.h.bar | | | | | |

Die Meßwerte der Dampf-/Gaspermeabilität wurden in einer Meßapparatur nach der Druckanstiegsmethode mit reinen Dämpfen bei fallenden Feeddrücken bestimmt.
Es wurden die Dämpfe:
Methanol (MeOH), Methyl-t-butylether (MTBE), 1,1,1-Trichlorethan ($Cl_3Eth$) und 1,1,2-Trichlorfluorethan ($Cl_3F_3Eth$)
und die Gase:
Stickstoff ($N_2$), Sauerstoff ($O_2$), Chlormethan ($CH_3Cl$) und Chlorethan ($CH_3CH_2Cl$) gemessen.

MEMBRANFLÜSSE DER DÄMPFE:

| Membran | $pCl_3Eth$ | pMeOH | pMTBE | $pCl_3F_3Eth$ | $pO_2$ |
|---|---|---|---|---|---|
| A4 (10%) | 1.71 | 0.99 | 0.96 | 0.48 | 0.030 |
| C4 (10%) | 1.29 | 1.84 | 0.54 | 0.23 | 0.025 |
| GI (10%) | 4.49 | 1.31 | 3.05 | 1.76 | 0.070 |
| P4 (10%) | 1.23 | 0.33 | 0.71 | 0.30 | 0.018 |
| PDMS 1 µm | 35.1 | 34.6 | 28.7 | 19.3 | 2.13 |
| AI/1 µm PDMS | 11.6 | 10.4 | 7.7 | 3.8 | 0.24 |
| CI/1 µm PDMS | 4.6 | 13.3 | 1.8 | 0.70 | 0.094 |
| Fluß (p) in $m^3N/m^2$.h.bar; AI = Poly(N-undecenoylmaleinimid-alt-octa-decylvinylether); CI = Poly(N-undecenoylmaleinimid-alt-vinyl-2-(2-ethoxyethoxy)ethylether); | | | | | |

MEMBRANSELEKTIVITÄT DER DÄMPFE:

| Membran | $pCl_3Eth/pN_2$ | $pMeOH/pN_2$ | $pMTBE/pN_2$ | $pCl_3F_3Eth/pN_2$ | $pO_2/pN_2$ |
|---|---|---|---|---|---|
| A4 (10%) | 150 | 86 | 83 | 41 | 2.56 |
| C4 (10%) | 130 | 190 | 55 | 24 | 2.55 |
| GI (10%) | 140 | 42 | 98 | 57 | 2.26 |
| P4 (10%) | 190 | 50 | 110 | 46 | 2.68 |
| PDMS 1 µm | 36 | 35 | 29 | 19 | 2.13 |
| Al/1 µm PDMS | 120 | 110 | 79 | 39 | 2.44 |
| Cl/1 µm PDMS | 110 | 320 | 42 | 17 | 2.22 |
| AI = Poly(N-undecenoylmaleinimid-alt-octadecylvinylether); CI = Poly(N-undecenoylmaleinimid-alt-vinyl-2-(2-ethoxyethoxy)ethylether); | | | | | |

MEMBRANFLÜSSE DER GASE:

| Membran | $pN_2$ | $pO_2$ | $pCH_3Cl$ | $pCH_3CH_2Cl$ |
|---|---|---|---|---|
| A4 (10%) | 0.0113 | 0.0286 | 0.0818 | 0.0509 |
| C4 (10%) | 0.0123 | 0.0325 | 0.168 | 0.0148 |
| GI (10%) | 0.0405 | 0.0951 | 0.455 | 0.0532 |
| P4 (10%) | 0.00727 | 0.0191 | 0.0878 | 0.00634 |
| PDMS 1 µm | | | | |
| Al/1 µm PDMS | 0.0674 | 0.161 | 1.74 | 0.363 |
| Fluß (p) in $m^3N/m^2$.h.bar; AI = Poly(N-undecenoylmaleinimid-alt-octadecylvinylether); CI = Poly(N-undecenoylmaleinimid-alt-vinyl-2-(2-ethoxyethoxy)ethylether; | | | | |

MEMBRANSELEKTIVITÄT DER GASE:

| Membran | $pO_2$ /$pN_2$ | $pCH_3Cl$ /$pN_2$ | $pCH_3CH_2Cl$ /$pN_2$ |
|---|---|---|---|
| A4 (10%) | 2.53 | 7.2 | 4.5 |
| C4 (10%) | 2.63 | 14 | 1.2 |
| GI (10%) | 2.33 | 12 | 1.5 |
| P4 (10%) | 2.62 | 12 | 0.87 |
| PDMS 1 µm | 2.2 | 12 | 1.3 |
| AI/1 µm PDMS | 2.4 | 27 | 6.1 |
| AI = Poly(N-undecenoylmaleinimid-alt-octadecylvinylether) | | | |

Beispiel 10

Mit einer Meßapparatur nach der Druckanstiegsmethode wurde die Gaspermeabilität für das Stoffgemisch Methanol/Argon bei verschiedenen Methanolpartialdrucken gemessen. Die Feed- und die Permeatkonzentration wurden online mit einem Massensprektrometer gemessen. Daraus wurden die Selektivität und die Permeatkonzentration errechnet. Es wurde bei 30° C gemessen und ein kleiner Stufenschnitt genommen (Feed-Konz. Permeat-Konz.).

REALDAMPFTRENNUNG METHANOL/ARGON:

| Membran | Feed Vol% | Perm. Vol% | alpha | Ges.Fluß p | MeOH-Fluß p | Ar-Fluß p |
|---|---|---|---|---|---|---|
| GI | - | - | - | 0.0794 | - | 0.0794 |
| | 0.441 | 9.4 | 24 | 0.0878 | 0.0083 | 0.0795 |
| | 0.996 | 19.3 | 24 | 0.0905 | 0.0175 | 0.0730 |
| | 2.02 | 33.9 | 25 | 0.103 | 0.0349 | 0.0681 |
| | 3.86 | 48.8 | 24 | 0.123 | 0.0600 | 0.0630 |
| | 7.01 | 62.8 | 23 | 0.154 | 0.0967 | 0.0573 |
| | 12.1 | 77.3 | 25 | 0.219 | 0.169 | 0.0497 |
| | 15.7 | 82.4 | 25 | 0.249 | 0.205 | 0.0439 |
| C4 | - | - | - | 0.0239 | - | 0.0239 |
| | 0.441 | 26.0 | 84 | 0.0345 | 0.0090 | 0.0255 |
| | 0.996 | 44.5 | 83 | 0.0373 | 0.0166 | 0.0207 |
| | 2.02 | 61.9 | 81 | 0.0372 | 0.0230 | 0.0142 |
| | 3.86 | 78.8 | 94 | 0.0373 | 0.0294 | 0.0079 |
| | 7.01 | 89.2 | 110 | 0.118 | 0.105 | 0.0127 |
| | 12.1 | 93.9 | 110 | 0.192 | 0.180 | 0.0117 |
| | 15.7 | 95.6 | 120 | 0.261 | 0.250 | 0.0110 |
| Fluß (p) in $m^3{}_N/m^2.h.bar$ | | | | | | |

Aus der einzigen Figur ist ein Effektivitätsvergleich von Membranen verschiedener Trennfaktoren ersichtlich.

Die Werte für die Feed- und die Permeatkonzentration werden dabei in Form eines Diagramm zusammen mit den Werten für hypothetische Membranen mit Trennfaktoren von alpha= 10 und 310 eingetragen. Ein Vergleich der Kurven ergibt, daß die selektiveren Membranen einen Vorteil gegenüber Membranen mit Trennfaktoren kleiner 25 ergeben.

Besonders in Feed-Konzentrationsbereich überhalb von 5 Vol% werden die Unterschiede deutlich und auch eine Membran mit alpha=25 fällt gegenüber der selektiveren Membran deutlich zurück.

Die Selektivität einer Standard PDMS-Membran liegt bei etwa alpha=25.

**Patentansprüche**

**1.** Membran, insbesondere Gastrenn- und Pervaporationsmembran, auf Basis von Graftcopolymeren, dadurch erhältlich, daß man ein erstes Polymer mit folgender wiederkehrender Einheit der allgemeinen Formel I:

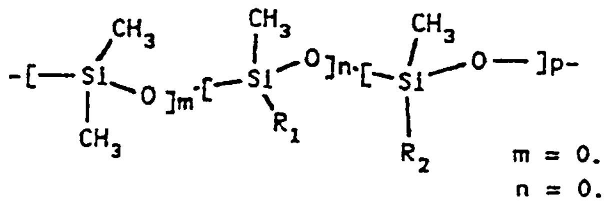

m = 0.1 - 0.9
n = 0.9 - 0.1
p = 0.03 - 0.04)

worin die Reste $R_1$ und $R_2$, die gleich oder verschieden sein können, einen linearen, verzweigten oder cyclischen C1-C12 Kohlenwasserstoffrest bedeuten, mit der Maßgabe, daß mindestens einer der Reste $R_1$ und $R_2$ einen linearen oder verzweigten Kohlenwasserstoffrest mit einer endständigen C=C Doppelbindung darstellt, ggf. ein zweites Polymer, das in der Hauptkette und/oder in der Seitenkette C=C Doppelbindungen besitzt und ein zur Hydrosilylierungsreaktion befähigtes niedermolekulares Siloxancopolymer in Lösung unvollständig vernetzt, diese Lösung auf einen unbehandelten oder behandelten, per se bekannten Träger aufbringt und dann über die in dem Propfcopolymer vorhandenen Doppelbindungen zur Unlöslichkeit vernetzt.

2. Membran nach Anspruch 1, dadurch gekennzeichnet, daß das zweite Polymer ein alternierendes Copolymer mit der folgenden wiederkehrenden Einheit der allgemeinen
Formel II:

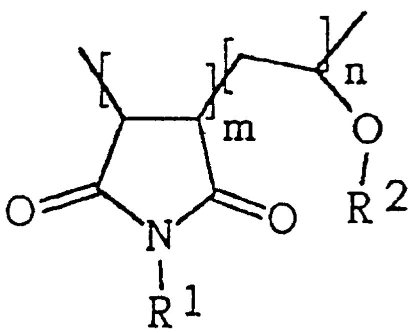

(1)

m=n

ist, wobei 10 bis 100 % der Reste $R_1$ und/oder $R_2$, die gleich oder verschieden sein können und einen linearen, verzweigten oder cyclischen $C_1$-$C_{18}$-Kohlenwasserstoffrest bedeuten, eine insbesondere endständige C=C Doppelbindung aufweisen.

3. Membran nach Anspruch 1, dadurch gekennzeichnet, daß das zweite Polymer durch Metathesereaktion aus cyclischen Olefinen hergestellt worden ist.

4. Membran nach einem der vorhergehenden Ansprüche, dadurch gekennzeichnet, daß der per se bekannte Träger aus einer 0,1 bis 1 µm dicken Schicht aus einem besonders gut gasdurchlässigen Polymer besteht.

5. Membran nach Anspruch 4, dadurch gekennzeichnet, daß das besonders gut gasdurchlässige Polymer aus Poly (dimethylsiloxan) oder aus Poly(trimethylsilylpropin) besteht.

6. Membran nach einem der vorhergehenden Ansprüche, dadurch gekennzeichnet, daß das Graftcopolymer als Film mit einer Dicke von 0,5 bis 200 µm vorliegt.

7. Graftcopolymere, dadurch erhältlich, daß man ein erstes Polymer sowie ein Siloxancopolymer, wie jeweils in Anspruch 1 definiert, sowie gegebenenfalls ein zweites Polymer gemäß einem der Ansprüche 1 bis 3 in Lösung teilweise oder vollständig vernetzt.

8. Verfahren zur Herstellung der Membran nach einem der Ansprüche 1 bis 6, dadurch gekennzeichnet, daß man das erste Polymer gemäß Anspruch 1 zusammen mit einem zur Hydrosilylierungsreaktion befähigten niedermolekularen Siloxancopolymer gemäß Anspruch 1 sowie gegebenenfalls in Anwesenheit des zweiten Polymers gemäß einem der Ansprüche 1 bis 3 und eines Katalysators, insbesondere für die Hydrosilylierung, in einem Lösungsmittel teilweise vorvernetzt, wobei man den Grad der Vorvernetzung insbesondere gelchromatographisch bestimmt, die so erhaltene Lösung auf einen behandelten oder unbehandelten, per se bekannten Träger aufbringt und dann die Vernetzung bis zur Unlöslichkeit des erhaltenen Polymers fortsetzt.

9. Verfahren nach Anspruch 8, dadurch gekennzeichnet, daß man das Siloxancopolymer in einer Menge von 5 bis 10 Gew.-% einsetzt, bezogen auf das Gesamtgewicht der eingesetzten Polymere.

## Claims

1. Membrane, in particular a membrane for gas separation and pervaporation, on the basis of graft copolymers, obtainable by incompletely cross-linking in solution a first polymer with the following repeated unit of the general Formula I:

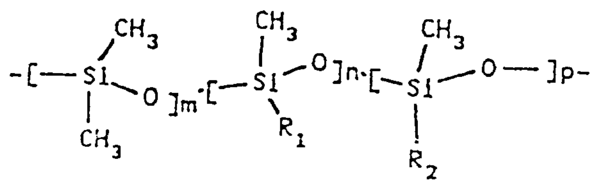

$m = 0.1 - 0.9$

$n = 0.9 - 0.1$

$p = 0.03 - 0.04,$

wherein the R1 and R2 radicals, which may be the same or different, represent a linear, branched or cyclic C1-C12 hydrocarbon radical, with the proviso that at least one of the radicals R1 and R2 represents a linear or branched hydrocarbon radical with a terminal C=C double bond, where appropriate a second polymer, which possesses C=C double bonds in the main chain or in the side chain, and a low-molecular siloxane copolymer capable of a hydrosilylation reaction, applying this solution to an untreated or treated, per se known carrier, and then cross-linking the solution to insolubility via the double bonds present in the supportive co-polymer.

2. Membrane according to Claim 1, characterised in that the second polymer is an alternating copolymer with the following repeating unit of the general
Formula II:

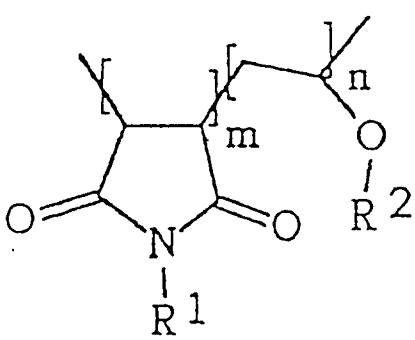

(1)
m=n

whereby 10 to 100% of the radicals R1 and/or R2, which may be the same or different, and which represent a linear, branched or cyclic C1 - C18 hydrocarbon radical, possess in particular a terminal C=C double bond.

3. Membrane according to Claim 1, characterised in that the second polymer has been manufactured from cyclic olefins via a substitution reaction.

4. Membrane according to one of the preceding Claims, characterised in that the in itself known carrier consists of a 0.1 to 1 µm thick layer of a particularly readily gas-permeable polymer.

5. Membrane, according to Claim 4, characterised in that the particularly readily gas-permeable polymer consists of poly (dimethylsiloxane) or of poly (trimethylsilylpropine).

6. Membrane, according to one of the preceding Claims, characterised in that the graft copolymer is present as a film with a thickness of 0.5 to 200 µm.

7. Graft copolymers, so obtainable, that a first polymer and a siloxane copolymer, as defined respectively in Claim 1, as well as a second polymer where appropriate as claimed in Claims 1 to 3 are partly or completely cross-linked in solution.

8. Process for manufacturing the membrane according to one of the Claims 1 to 6, characterised in that the first polymer as claimed in Claim 1 together with a low-molecular siloxane polymer capable of the hydrosilylation reaction as claimed in Claim 1 as well as, where appropriate, in the presence of the second polymer as claimed in one of Claims 1 to 3 and a catalyst, in particular for hydrosilylation, are partly pre-crosslinked in a solvent, whereby the degree of pre-crosslinking is determined in particular by gel chromatography, the solution so obtained is applied to a treated or untreated, per se known carrier and then the crosslinking is continued until the polymer obtained becomes insoluble.

9. Process according to Claim 8, characterised in that the siloxane co-polymer is used in a quantity of 5 to 10 % by weight, with respect to the total weight of the polymers used.

## Revendications

1. Membrane, notamment membrane de pervaporation et de séparation de gaz à base de copolymères greffés, que l'on peut obtenir en ce qu'un premier polymère comportant le motif répétitif de formule générale I

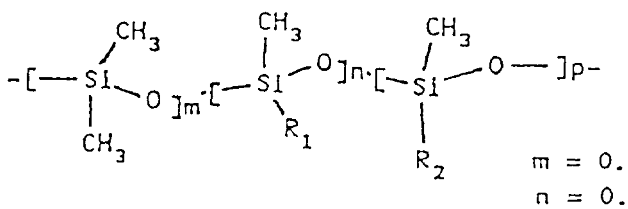

m = 0.1 - 0.9
n = 0.9 - 0.1
p = 0.03 - 0.04,

dans laquelle les radicaux $R_1$ et $R_2$, pouvant être identiques ou différents, représentent un radical hydrocarboné linéaire, ramifié ou cyclique en $C_1$-$C_{12}$ à la condition qu'au moins l'un des radicaux $R_1$ et $R_2$ représente un radical hydrocarboné linéaire ou ramifié comportant une double liaison C=C terminale, éventuellement un deuxième polymère comportant dans sa chaîne principale et/ou sa chaîne latérale des doubles liaisons C=C et un copolymère de siloxane de bas poids moléculaire, capable d'une réaction d'hydrosilylation, sont réticulés de façon incomplète en solution, on dépose cette solution sur un support connu en soi traité ou non traité et ensuite, par l'intermédiaire des doubles liaisons présentes dans le copolymère greffé, on réticule jusqu'à l'insolubilité.

2. Membrane selon la revendication 1, caractérisée en ce que le deuxième polymère est un copolymère alterné comportant le motif répétitif suivant, répondant à la formule générale II

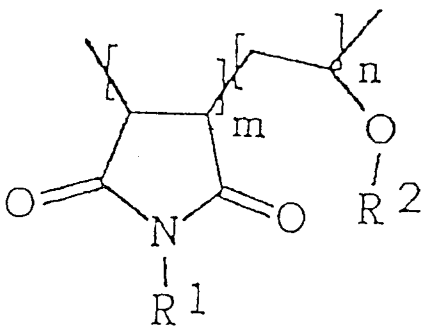

(1)

m=n

10 à 100% des radicaux $R_1$ et/ou $R_2$, qui peuvent être identiques ou différents et représenter un radical hydrocarboné linéaire, ramifié ou cyclique en $C_1$-$C_{18}$, pouvant présenter notamment une double liaison C=C terminale.

3. Membrane selon la revendication 1, caractérisée en ce que le deuxième polymère est préparé par métathèse à partir d'oléfines cycliques.

4. Membrane selon une ou plusieurs des revendications précédentes, caractérisée en ce que le support connu en soi est constitué d'une couche d'une épaisseur de 0,1 à 1 µm d'un polymère particulièrement perméable aux gaz.

5. Membrane selon la revendication 4, caractérisée en ce que le polymère particulièrement perméable aux gaz est un poly(diméthylsiloxane) ou un poly(triméthylsilylpropyne).

6. Membrane selon l'une des revendications précédentes, caractérisée en ce que le copolymère greffé se présente sous forme de pellicule d'une épaisseur de 0,5 à 200 µm.

7. Copolymères greffés que l'on peut obtenir en ce qu'un premier polymère ainsi qu'un copolymère siloxane, selon la définition respective dans la revendication 1, ainsi qu'éventuellement un deuxième polymère selon l'une des revendications 1 à 3, sont réticulés en solution complètement ou partiellement.

8. Procédé pour la préparation de la membrane selon l'une des revendications 1 à 6, caractérisé en ce qu'on réticule préalablement, partiellement, en milieu d'un solvant, le premier polymère selon la revendication 1, conjointement avec un copolymère siloxane de bas poids moléculaire, capable de réaction d'hydrosilylation selon la revendication 1, ainsi qu'éventuellement en présence du deuxième polymère selon l'une des revendications 1 à 3 et d'un catalyseur, notamment de catalyseur d'hydrosilylation, en déterminant notamment par chromatographie sur gel le degré de réticulation préalable, on dépose la solution ainsi obtenue sur un support traité ou non traité connu en soi, puis on continue le processus de réticulation jusqu'à ce qu'on obtienne le degré d'insolubilité du polymère obtenu.

9. Procédé selon la revendication 8, caractérisé en ce qu'on utilise le copolymère du siloxane dans une quantité de 5 à 10 % en poids par rapport au poids total du polymère employé.

Fig. 1

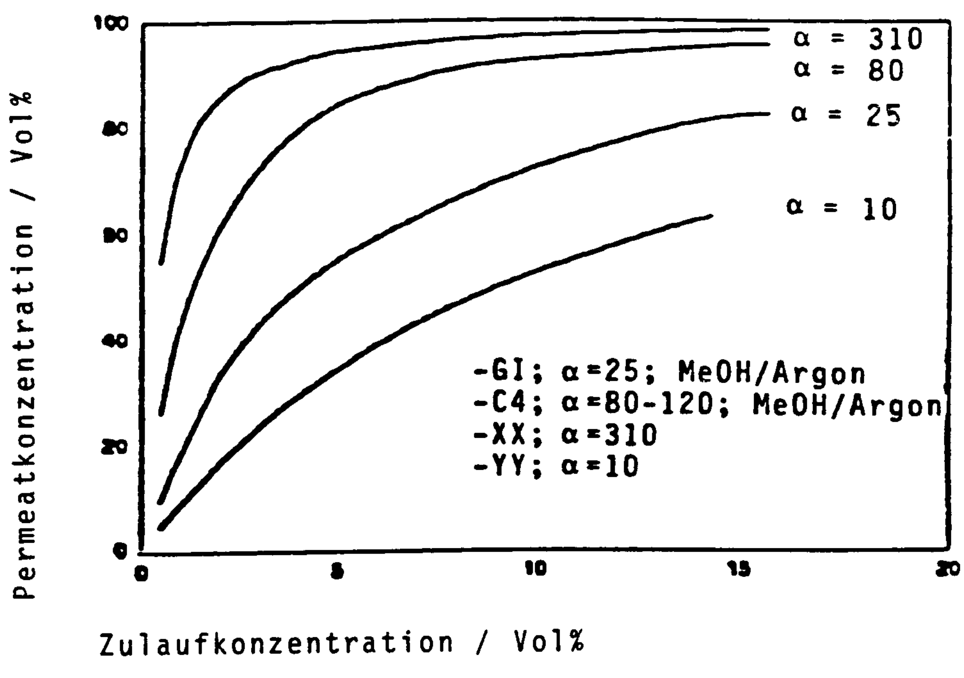
100
80
60
40
20
0
5
10
15
20
α = 310
α = 80
α = 25
α = 10
-GI; α=25; MeOH/Argon
-C4; α=80-120; MeOH/Argon
-XX; α=310
-YY; α=10
Permeatkonzentration / Vol%
Zulaufkonzentration / Vol%